# FASCICULE DE BREVET EUROPEEN

(11) **EP 1 722 240 B1**
(45) Date de publication et mention de la délivrance du brevet: **11.08.2010**
(21) Numéro de dépôt: 06290716.7
(22) Date de dépôt: 04.05.2006
(51) Int. Cl.: G01P 15/00

(54) **Accéléromètre thermique à detection et contre-réaction multiplexées**
Thermischer Beschleunigungsmesser mit muliplexierter Erfassung und Rückkopplung
Thermal accelerometer using multiplexed detection and counter-reaction

(30) Priorité: 13.05.2005 FR 0504868
(43) Date de publication de la demande: 15.11.2006
(73) Titulaire: Sagem Défense Sécurité, 75015 Paris (FR)
(72) Inventeur: DIDO, Jérôme, 75014 Paris (FR); LOISEL, Pierre, 95800 Courdimanche (FR); RENAULT, Alain, 95300 Pontoise (FR); COMBETTE, Philippe, F-34170 CASTELNAU LE LEZ (FR); CRESPY, Nicolas, F-11400 MAS SAINTES PUELLES (FR); GIANI, Alain, F-34920 LE CRES (FR)
(74) Mandataire: Fruchard, Guy

(56) Documents cités:
- DE-A1- 10 348 245
- FR-A- 2 817 351

## Description

La présente invention concerne un accéléromètre thermique à asservissement à zéro.

### ARRIERE PLAN DE L'INVENTION

On connaît du document FR-A-2 817 351 un accéléromètre thermique comportant une enceinte remplie de gaz dans laquelle sont disposés un brin de chauffage central de part et d'autre duquel s'étendent des brins de détection ayant une résistivité sensible à la température. Les brins de détection sont montés en pont de Wheatstone avec des résistances fixes. Le pont de Wheatstone est relié à un circuit de mesure fournissant un signal électrique représentatif d'un écart de température entre les brins de détection. L'écart de température qui se traduit par un déséquilibre du pont de Wheatstone est représentatif de l'accélération à laquelle l'accéléromètre est soumis.

Afin d'augmenter la précision et la capacité de l'accéléromètre à détecter des variations d'accélération à des fréquences élevées, ce document propose également d'associer au brin de détection des brins de contre-réaction qui sont disposés de part et d'autre des brins de détection et sont alimentés avec un signal de contre-réaction pour compenser l'écart de température entre les brins de détection et permettre un asservissement à zéro du déséquilibre des brins de détection.

Dans un mode de réalisation particulier, il est mentionné que les signaux de contre-réaction sont appliqués sur les brins de contre-réaction. Il est en outre prévu que les signaux de contre-réaction sont des signaux impulsionnels qui peuvent être de largeur variable mais dans le mode de réalisation plus particulièrement décrit, les signaux impulsionnels sont de largeur constante, ce qui implique une gestion complexe des signaux de contre-réaction.

### OBJET DE L'INVENTION

Un but de l'invention est de proposer un accéléromètre présentant tout à la fois des performances au moins égales à celles d'un accéléromètre à asservissement à zéro, et une gestion simplifiée de cet asservissement.

### BREVE DESCRIPTION DE L'INVENTION

Selon l'invention, on propose un accéléromètre thermique comportant deux brins de détection ayant une résistivité sensible à la température, un organe de détection d'un écart de température entre les brins de détection, un organe de contre-réaction pour établir un équilibre de température entre les brins de détection en fournissant aux brins de détection des signaux de contre-réaction en créneaux ayant une largeur variable, un organe de calcul d'accélération, et un organe de multiplexage relié aux brins de détection, à l'organe de détection et à l'organe de contre-réaction pour alternativement : assurer une mesure de l'écart de température entre les brins de détection, et fournir des signaux de contre-réaction aux brins de détection, la largeur des signaux en créneaux étant déterminée par comparaison entre un signal en dents de scie et des signaux continus représentatifs de l'écart de température entre les brins de détection.

Ainsi, la compensation de température est effectuée automatiquement en fonction de l'écart de température, de sorte que la mise en oeuvre de la fonction de compensation est considérablement simplifiée.

Selon une version avantageuse de l'invention, les signaux continus représentatifs de l'écart de température entre les brins de détection sont symétriques par rapport à une valeur moyenne du signal en dents de scie.

Ainsi, les signaux de contre-réaction ont une valeur moyenne nulle de sorte que l'accéléromètre reste insensible à un environnement perturbé du point de vue électromagnétique.

### BREVE DESCRIPTION DES DESSINS

D'autres caractéristiques et avantages de l'invention apparaîtront à la lecture de la description qui suit d'un mode de réalisation particulier non limitatif de l'invention en relation avec les figures ci-jointes parmi lesquelles :
- la figure 1 est une représentation schématique et par blocs de l'accéléromètre selon l'invention;
- la figure 2 est une illustration schématique d'un mode d'obtention de signaux de contre-réaction par comparaison avec un signal en dents de scie.

### DESCRIPTION DETAILLEE DE L'INVENTION

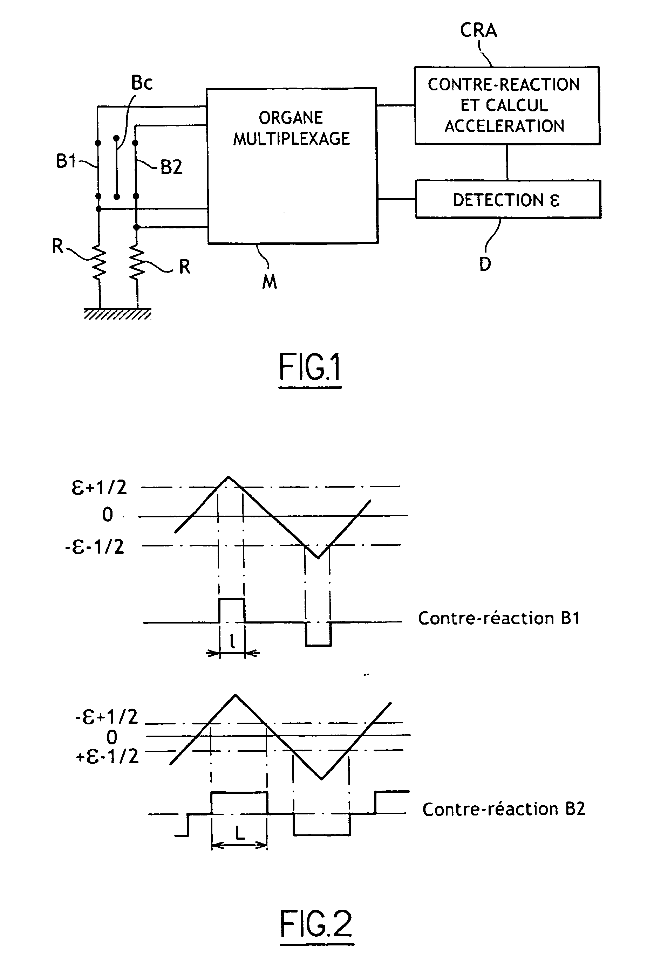

En référence à la figure 1, l'accéléromètre selon l'invention comporte de façon connue en soi un brin chauffant Bc et des brins de détection B1 et B2 disposés de part et d'autre du brin chauffant Bc parallèlement à celui-ci. Egalement de façon connue en soi, l'accéléromètre comporte des résistances R montées pour réaliser un pont de Wheastone avec les brins de détection B1 et B2.

Selon l'invention, l'accéléromètre comporte en outre un organe de multiplexage M relié d'une part à un organe de détection D d'un écart de température ε entre les brins de détection B1, B2, et relié d'autre part à un organe de contre-réaction et de calcul d'accélération CRA également relié à l'organe de détection D.

Dans une étape de détection de l'accélération, l'organe de multiplexage relie les brins de détection B1 et B2 et les résistances R selon un pont de Wheastone dont la diagonale est reliée à l'organe de détection D pour mesurer un déséquilibre du pont de Wheastone et en déduire l'écart de température ε entre les brins de détection B1 et B2. Cet écart de température ε est transmis à l'organe de contre-réaction pour élaborer des signaux de contre-réaction.

Dans le mode de réalisation illustré sur la figure 2, un signal de contre-réaction en créneaux est élaboré pour chacun des brins de détection B1 et B2. Pour le brin de détection B1, le signal de contre-réaction est obtenu en comparant un signal en dent de scie, ici un signal variant entre -1 et +1, à des signaux continus symétriques par rapport à une valeur moyenne du signal en dents de scie, et représentatifs de l'écart de température entre les brins de détection, ici des signaux ε+1/2 et -ε-1/2. Les créneaux du signal de contre-réaction correspondant sont déterminés par un changement d'état à chaque égalité du signal en dents de scie et de l'un des signaux continus représentatifs de l'écart de température entre les brins de détection. Dans ce mode d'élaboration du signal de contre-réaction, la valeur représentative de l'écart de température est bien entendu normalisée pour être comprise entre 0 et 1/2. Les créneaux obtenus ont une largeur l.

Par ailleurs, pour obtenir le signal de contre-réaction du brin B2, le même signal en dent de scie est comparé à des signaux continus, également symétriques par rapport à la valeur moyenne du signal en dent de scie, ici -ε+1/2 et +ε-1/2. Les créneaux obtenus ont une largeur L différente de la largeur l lorsque ε est différent de zéro.

On notera que pour une valeur nulle de l'écart de température, les deux signaux de contre-réaction ont des créneaux de largeurs égales tandis que pour une valeur non nulle de l'écart de température, les signaux de contre-réaction ont des créneaux de largeur différente, ce qui permet un rééquilibrage des températures des brins de détection. Ce mode d'obtention des signaux de contre-réaction permet de réaliser l'accéléromètre thermique selon l'invention sans brin de chauffage Bc, ce brin de chauffage étant remplacé par l'échauffement dû aux signaux de contre-réaction équilibrés.

Bien entendu, l'invention n'est pas limitée au mode de réalisation décrit et on peut y apporter des variantes de réalisation sans sortir du cadre de l'invention tel que défini par les revendications.

En particulier, la mise en oeuvre de signaux de contre-réaction ayant une valeur moyenne nulle, a essentiellement pour fonction d'éviter une déformation des brins de détection lorsqu'ils sont soumis à des perturbations électromagnétiques. Dans le cas où l'accéléromètre n'est pas soumis à des perturbations électromagnétiques, par exemple lorsque l'accéléromètre est protégé par un blindage, on peut utiliser des signaux de contre-réaction de valeur moyenne non nulle. Dans ce cas il est même possible de générer un seul signal en créneaux pour les deux brins de détection. Ce signal en créneaux unique est alors élaboré par comparaison du signal en dents de scie avec des signaux continus non symétriques par rapport à la valeur moyenne du signal en dents de scie, puis le signal en créneaux est subdivisé en deux signaux de contre-réaction en fournissant les créneaux en alternance à chacun des brins de détection, par multiplexage.

De même, le signaux de contre-réaction ne sont pas nécessairement des signaux en créneaux et peuvent être réalisés par tout moyen adapté à la façon dont l'écart de température entre les brins de détection est détecté.

## Revendications

1. Accéléromètre thermique comportant deux brins de détection (B1, B2) ayant une résistivité sensible à la température, un organe de détection (D) d'un écart de température entre les brins de détection, un organe de contre-réaction (CRA) pour établir un équilibre de température entre les brins de détection en fournissant aux brins de détection des signaux de contre-réaction en créneaux (1, L) ayant une largeur variable, et un organe de calcul d'accélération, **caractérisé en ce qu'**il comporte un organe de multiplexage (M) relié aux brins de détection, à l'organe de détection et à l'organe de contre-réaction adapté pour alternativement : assurer une mesure de l'écart de température (ε) entre les brins de détection, et fournir les signaux de contre-réaction aux brins de détection, la largeur des signaux en créneaux étant déterminée par comparaison entre un signal en dents de scie et des signaux continus représentatifs de l'écart de température entre les brins de détection.

2. Accéléromètre selon la revendication 1, **caractérisé en ce que** les signaux continus représentatifs de l'écart de température entre les brins de détection sont symétriques par rapport à une valeur moyenne du signal en dents de scie.

3. Accéléromètre selon la revendication 1, **caractérisé en ce que**, pour une valeur nulle de l'écart de température, les créneaux des signaux de contre-réaction ont des largeurs égales.

## Claims

1. A thermal accelerometer comprising two detector strands (B1, B2) having resistivity that is temperature sensitive, a detector member (D) for detecting a temperature difference between the detector strands, a feedback member (FAC) for establishing temperature equilibrium between the detector strands by supplying the detector strands with pulse feedback signals (1, L) of variable width, and a member for calculating acceleration, the accelerometer being **characterized in that** it further comprises a multiplexer member (M) connected to the detector strands, to the detector member, and to the feedback member arranged so as to perform the following in alternation: measuring the temperature difference (ε) between the detector strands; and providing the detector strands with the feedback signals, the widths of the pulse signals being determined by comparing a sawtooth signal with DC signals representative of the temperature difference between the detector strands.

2. An accelerometer according to claim 1, **characterized in that** the DC signals representative of the temperature difference between the detector strands are symmetrical about a mean value of the sawtooth signal.

3. An accelerometer according to claim 1, **characterized in that** for a temperature difference having a value of zero, the pulses of the feedback signals are of equal widths.

## Patentansprüche

1. Thermischer Beschleunigungsmesser, umfassend zwei Detektionsdrähte (B1, B2), die einen temperaturempfindlichen Widerstand haben, ein Detektionselement (D) zum Erfassen einer Temperaturabweichung zwischen den Detektionsdrähten, ein Gegenkopplungselement (CRA) zum Herstellen eines Temperaturgleichgewichts zwischen den Detektionsdrähten, indem es den Detektionsdrähten Gegenkopplungssignale in Form von Rechtecken (1, L) mit veränderlicher Breite zuführt, sowie ein Element zur Beschleunigungsberechnung, **dadurch gekennzeichnet, dass** er ein Multiplexierungselement (M) umfasst, das mit den Detektionsdrähten, dem Detektionselement und dem Gegenkopplungselement verbunden ist, welches abwechselnd dazu geeignet ist: Sicherstellen einer Messung der Temperaturabweichung (ε) zwischen den Detektionsdrähten und Zuführen der Gegenkopplungssignale an die Detektionsdrähte, wobei die Breite der Rechtecksignale durch einen Vergleich zwischen einem Sägezahnsignal und Dauersignalen bestimmt wird, die repräsentativ für die Temperaturabweichung zwischen den Detektionsdrähten sind.

2. Beschleunigungsmesser nach Anspruch 1, **dadurch gekennzeichnet, dass** die für die Temperaturabweichung zwischen den Detektionsdrähten repräsentativen Dauersignale in Bezug auf einen Mittelwert des Sägezahnsignals symmetrisch sind.

3. Beschleunigungsmesser nach Anspruch 1, **dadurch gekennzeichnet, dass** für einen Wert Null der Temperaturabweichung die Rechtecke der Gegenkopplungssignale gleiche Breiten haben.
